# EUROPEAN PATENT SPECIFICATION

(11) **EP 1 026 901 B1**
(45) Date of publication and mention of the grant of the patent: **31.07.2002**
(21) Application number: 99830727.6
(22) Date of filing: 25.11.1999
(51) Int. Cl.: H04N 9/31, G09G 3/02

(54) **Display device with a photoluminescent screen**
Anzeigevorrichtung mit photolumineszentem Schirm
Dispositif d'affichage comprenant un écran photoluminescent

(30) Priority: 02.02.1999 IT TO990075
(43) Date of publication of application: 09.08.2000
(73) Proprietor: C.R.F. Società Consortile per Azioni, 10043 Orbassano (TO) (IT)
(72) Inventor: Perlo, Piero, 10043 Orbassano (IT); Repetto, Piermario, 10043 Orbassano (IT); Bigliati, Claudia, 10043 Orbassano (IT); Lambertini, Vito, 10043 Orbassano (IT); Pullini, Daniele, 10043 Orbassano (IT)
(74) Representative: Notaro, Giancarlo

(56) References cited:
- EP-A- 0 837 117
- WO-A-90/12387
- WO-A-98/52359
- EDWARDS A ET AL: "PHOTOLUMINESCENCE AND ELECTROLUMINESCENCE OF NEW LANTHANIDE- (METHYOXYBENZOYL)BENZOATE COMPLEXES" JOURNAL OF APPLIED PHYSICS,US,AMERICAN INSTITUTE OF PHYSICS. NEW YORK, vol. 82, no. 4, 15 August 1997 (1997-08-15), pages 1841-1846, XP000749011 ISSN: 0021-8979

## Description

The present invention relates to a new application of light emitting devices using an organic luminescent material of the so-called LEP (Light Emitting Polymers) or OLED (Organic Light-Emitting Devices) type. Devices of this type have been disclosed for instance in "High-External Quantum-Efficiency Organic Light-Emitting Devices, G. Gu et al. OPTICS LETTERS, vol. 22, n. 6, 15 March 1997. The devices of the above indicated type commonly have a layer of electro-luminescent material, such as Alq₃, for instance having a thickness of 80nm, and a second layer of the same thickness constituted by a material such as N, N'-diphenyl-N, N'-bis (3-methylphenyl) 1-1' biphenyl - 4, 4' diamine (TPD). An electronic display of the type indicated in the pre-characterizing portion of claim 1 is known from WO 90/12387.

The object of the present invention is that of proposing a new type of electronic display.

The main features of the display according to the invention are indicated in claim 1.

According to an essential feature of the invention, the panel including photo-luminescent material is flexible. Due to this feature, which is an advantage of the use of luminescent materials, the display according to the invention is adapted to be used in various applications even where the panel must be positioned on a curved support surface, which obviously opens various new possibilities to designers.

In the above mentioned preferred embodiment, the panel may be provided with a sequence of triads of micro-lines, each micro-line triad been provided for emitting light respectively in the field of red, green and blue, when it is radiated with UV light.

Scanning of the panel may be achieved by providing an optical system including at least a pair of reflective surfaces which can be oriented respectively around two axes which are orthogonal to each other, so as to enable the UV light beam which hits the display panel to be oriented in two mutually orthogonal directions.

Further features and advantages of the invention will become apparent from the description which follows with reference to the annexed drawings, given purely by way of non limiting example, in which:
figure 1 shows a diagram of a display system according to the invention, and
figures 2, 3 show two variants.

With reference to the drawing, numeral 1 designates a UV light source, such as a LED or laser source. The UV light emitted from source 1 is collimated and/or expanded and focused by an optical system 2 and controlled by means of a modulator/shutter 3 of any known type, such as electrical-optical, or eletrical-mechanical type, which can modulate the beam intensity. The UV light is focused by an objective 4 and/or an optional Fθ lens 8, on a screen or display panel 5 by means of a pair of mirrors 6, 7 which can be oriented around two mutually orthogonal axes, so that the UV rays coming out of the mirror system can be oriented along two mutually orthogonal directions so as to scan the screen 5. This result may be achieved both by electrical-mechanical systems, and by electrical-optical systems of a type known per se, which are not described herein in detail since they do not fall, taken alone within the scope of the invention.

The display panel 5 is constituted by a flexible screen, having a thickness of 300-500 micrometers, constituted by a photo-luminescent material of any known type, such as of the LEP or OLED type which has been mentioned at the beginning of the present description. As already indicated in the foregoing, this material is able to emit visible light as a result of being radiated with UV light. More specifically, the panel 4 is provided with a sequence of triads of micro-lines respectively provided for emitting light in the field of red (R), green (G) and blue (B) as a result of a radiation with UV light.

The actuator means, for example of electrical-mechanical, or electrical-optical type, which control the optical system 6, 7 to carry out scanning of the panel 5, are diagrammatically indicated by the block 11 in the figure. On their turn, the actuator means 11 are controlled by an electronic unit 10 which is programmed to obtain that a desired image be displayed. The actuator means 11 are able to carry out scanning of the panel 5, according to a programmed sequence, in a time lower than the reaction time of the human eye, so as to obtain that the desired image is displayed.

From the foregoing description, it is clearly apparent that the display according to the invention is characterised by very good characteristics from the point of view of simpli city of construction, reduced thickness and, above all, flexibility. This latter feature, which derives from the use of photo-luminescent materials, enable the display to be adapted easily to any planar or curved surfaces.

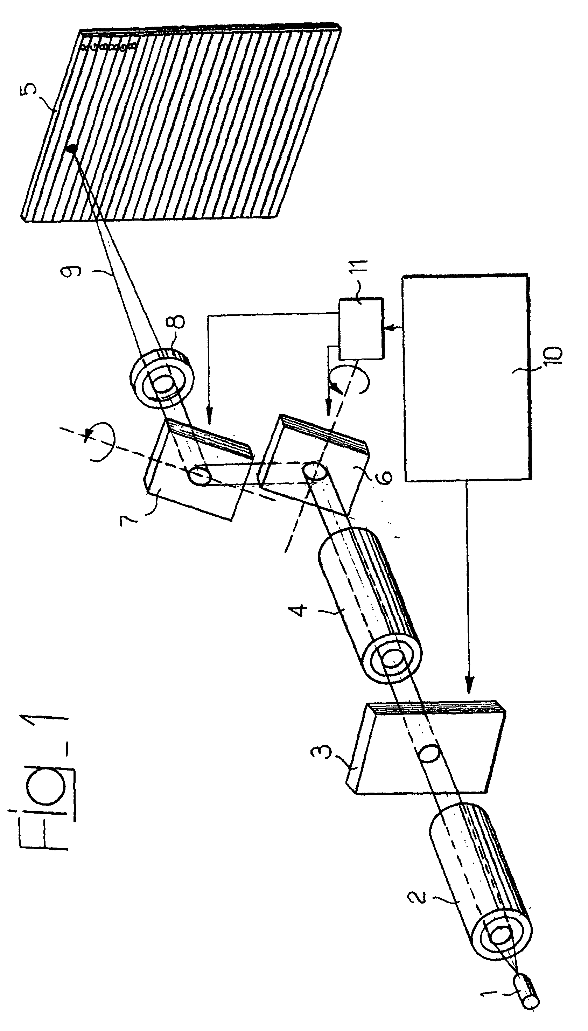

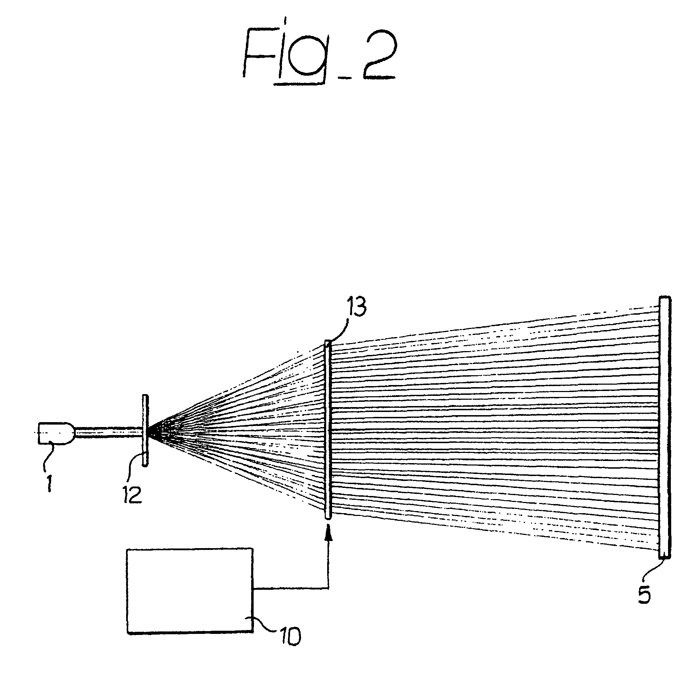

Figure 2 shows a second embodiment, in which the optical system 2-3-4 of figure 1 is replaced by a diffraction grating 12, such as of the DAMMAN type, with M x Nlines, whereas the optical systems 6, 7 which is electronically controlled is replaced by a matrix 13 of micro-shutters, each of which can be opened or closed on the basis of the instruction imparted by the electronic control unit 10, in order to enable or prevent passage of radiation towards panel 5, which thus can be scanned.

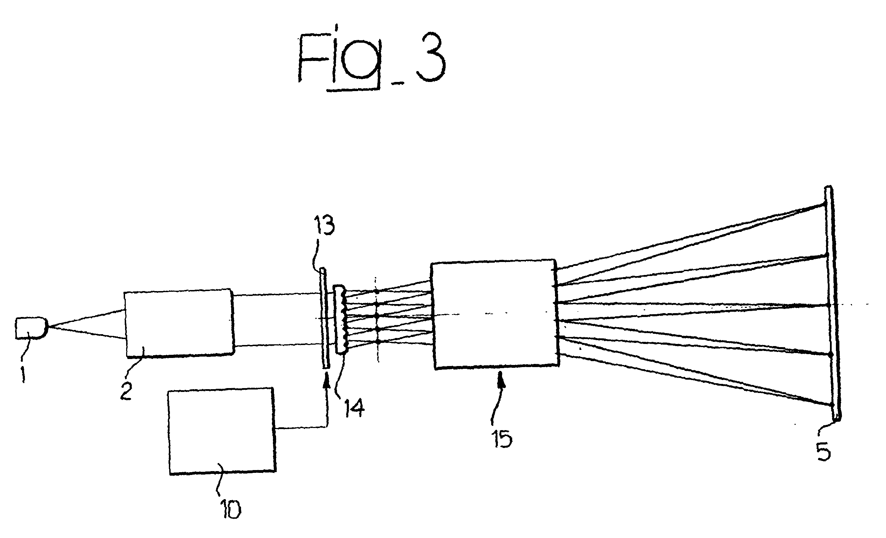

Figure 3 shows a further variant of figure 1 which makes use of the collimator/expander 2, similarly to the solution provided in figure 1. The cylindrical flow coming out of element 2 is directed towards a matrix of micro-shutters, of the type used in the variant of figure 2, which are controlled by the electronic control unit 10. Downstream of the matrix 13 there is arranged a matrix 14 of micro-lens which direct the radiation towards the panel 5, with the interposition of an optical system 15 for forming the image, which is made in any known way.

For the panel 5, it is also possible to make use of a panel on which inorganic phosphors are provided on which a diffusing screen is then applied. A device with such a panel does not fall under the scope of the claims.

Naturally, while the principle of the invention remains the same, the details of construction may widely vary with respect to what has been described and illustrated purely by way of example, without departing from the scope of the present invention as defined in the appended claims.

## Claims

1. Electronic display (1) comprising:
an UV ligth source (1) emitting an UV light beam,
a display screen (5) including a layer of photo-luminescent material arranged in a sequence of micro-areas provided for emitting visible light respectively in the range of red, green, and blue, when this screen (5) is radiated with UV light,
first optical means operating by refraction and/or reflection for varying the vergence and the dimensions of the UV light beam,
second optical means which are electronically controlled for directing the UV light beam emitted from the souce towards the screen (5), so as to scan the screen through a time lower than the reaction time of the human eye, in order to display a desired image,
**characterised in that**
the screen has a thickness between 300 and 500 micrometers and is flexible, and **in that**
the layer of photo-luminescent material is comprised of a layer of organic electro-luminescent material, such as Alq₃, and another layer of N, N'diphenyl-N, N'-bis(3-methylphenyl)1-1'biphenyl-4,4'diamine (TPD).

2. Display according to claim 1, **characterised in that** said micro-areas are micro-lines arranged according to a sequence of triads of micro-lines, each triads been provided for emitting light in the range of red, green and blue respectively.

3. Display according to claim 1, **characterised in that** said second optical means which are electronically controlled comprise a focusing lens (2), a modulator (3), and a pair of mirrors (5, 6) which can be oriented around two mutually orthogonal axes.

4. Display according to claim 3, **characterised in that** these mirrors are constituted by prisms operating by Total Internal Reflection.

5. Display according to claim 1, **characterised in that** the first optical means comprise a diffraction grating (12) and the second optical means which are electronically controlled comprise a matrix (13) of micro-shutters.

6. Display according to claim 1, **characterised in that** said first optical means comprises a collimator/expander device (2) and said second optical means which are electronically controlled comprise a matrix of micro-shutters (13), a matrix of micro-lenses (14) being provided downstream of said micro-shutter matrix (13), which direct the radiation towards the panel (5), an image forming optical device (15) being interposed between the micro-lens matrix (14) and the panel (5).

## Patentansprüche

1. Elektronische Anzeige (1), umfassend:
- eine UV-Lichtquelle, die einen UV-Lichtstrahl emittiert,
- einen Anzeigeschirm (5) mit einer Schicht eines photolumineszenten Materials, welches in einer Folge von Mikrobereichen angeordnet ist und zur Emittierung von sichtbarem Licht im Rot-, Grün- und Blaubereich dient, wenn der Schirm (5) mit UV-Licht bestrahlt wird,
- erste optische Mittel, die durch Refraktion und/oder Reflexion die Ablenkung und die Dimensionen des UV-Lichtstrahls variieren,
- zweite optische Mittel, die elektronisch gesteuert den von der Quelle emittierten Lichtstrahl auf den Schirm (5) leiten, derart, daß er den Schirm in einer Zeit unterhalb der Reaktionszeit des menschlichen Auges abtastet, um ein gewünschtes Bild sichtbar zu machen,
**dadurch gekennzeichnet, daß** der Schirm eine Dicke zwischen 300 und 500 µm aufweist und flexibel ist und daß die Schicht des photoluminenszenten Materials eine Schicht eines organischen elektro-luminenszenten Materials wie Alq₃ und eine weitere Schicht von N, N'diphenyl-N, N'-bis(3-methylphenyl)1-1'biphenyl-4.4'diamin (TPD) umfaßt.

2. Anzeige nach Anspruch 1, **dadurch gekennzeichnet, daß** die genannten Mikrobereiche Mikrolinien sind, angeordnet als Folge von Triaden von Mikrolinien, wobei jede Triade zur Lichtemission im Rot,- Grün- bzw. Blaubereich vorgesehen ist.

3. Anzeige nach Anspruch 1, **dadurch gekennzeichnet, daß** das zweite optische Mittel, welches elektronisch gesteuert ist, eine Fokussierlinse (2), einen Modulator (3) und ein Paar Spiegel (5,6) umfaßt, die um zwei zueinander orthogonal liegende Achsen eingestellt werden können.

4. Anzeige nach Anspruch 3, **dadurch gekennzeichnet, daß** diese Spiegel durch Prismen mit Totalreflexion gebildet werden.

5. Anzeige nach Anspruch 1, **dadurch gekennzeichnet, daß** das erste optische Mittel ein Beugungsgitter umfaßt und das zweite, elektronisch gesteuerte Mittel eine Matrix (13) von Mikroblenden.

6. Anzeige nach Anspruch 1, **dadurch gekennzeichnet, daß** das erste optische Mittel eine Kollimator/Expander-Vorrichtung (2) und das zweite, elektronisch gesteuerte optische Mittel eine Matrix von Mikroblenden (13) umfaßt, wobei nach der Mikroblendenmatrix (13) eine Matrix von Mikrolinsen (14) vorgesehen ist, die die Strahlung zur Frontplatte lenken, wobei eine bilderzeugende optische Vorrichtung (15) zwischen der Mikrolinsenmatrix (14) und der Frontplatte (5) eingesetzt ist.

## Revendications

1. Dispositif d'affichage électronique (1) comprenant :
une source de lumière ultraviolette (1) émettant un faisceau de lumière ultraviolette,
un écran d'affichage (5) comportant une couche de matière photoluminescente disposée suivant une séquence de micro-aires prévues pour émettre de la lumière visible, respectivement dans l'intervalle du rouge, du vert et du bleu, lorsque cet écran (5) reçoit de la lumière ultraviolette,
des premiers moyens optiques agissant, par réfraction et, ou bien, réflexion, afin de faire varier la vergence et les dimensions du faisceau de lumière ultraviolette,
des deuxièmes moyens optiques, qui sont électroniquement commandés de façon à diriger le faisceau de lumière ultraviolette émis depuis la source en direction de l'écran (5), afin de balayer l'écran pendant une durée inférieure au temps de réaction de l'oeil humain, de manière à afficher une image voulue,
**caractérisé en ce que** :
l'écran a une épaisseur comprise entre 300 et 500 µm et est souple, et **en ce que** :
la couche de matière photoluminescente est constituée d'une couche de matière électroluminescente organique, comme par exemple Alq₃, et d'une autre couche de N,N'-diphényl-N,N'-bis(3-méthylphényl)-1,1'-biphényl-4,4'-diamine (TPD).

2. Dispositif d'affichage selon la revendication 1, **caractérisé en ce que** lesdites micro-aires sont des microlignes disposées suivant une séquence de triplets de microlignes, chaque triplet étant prévu pour émettre de la lumière, respectivement, dans l'intervalle du rouge, du vert et du bleu.

3. Dispositif d'affichage selon la revendication 1, **caractérisé en ce que** lesdits deuxièmes moyens optiques qui sont électroniquement commandés comprennent une lentille de mise au point (2), un modulateur (3), et deux miroirs (5, 6) qui peuvent être orientés sur deux axes mutuellement perpendiculaires.

4. Dispositif d'affichage selon la revendication 3, **caractérisé en ce que** ces miroirs sont constitués par des prismes fonctionnant en réflexion interne totale.

5. Dispositif d'affichage selon la revendication 1, **caractérisé en ce que** lesdits premiers moyens optiques comprennent un réseau de diffraction (12) et lesdits deuxième moyens optiques qui sont électroniquement commandés comprennent une matrice (13) de micro-obturateurs.

6. Dispositif d'affichage selon la revendication 1, **caractérisé en ce que** lesdits premiers moyens optiques comprennent un collimateur/dispositif d'agrandissement (2) et lesdits deuxièmes moyens optiques qui sont commandés électroniquement comprennent une matrice de micro-obturateurs (13), une matrice de microlentilles (14) étant prévue en aval de ladite matrice de micro-obturateurs (13), qui dirigent le rayonnement en direction de l'écran (5), un dispositif optique (15) de formation d'image s'interposant entre la matrice de microlentilles (14) et l'écran (5).
